# EUROPÄISCHE PATENTSCHRIFT

(11) **EP 1 659 049 B1**
(45) Veröffentlichungstag und Bekanntmachung des Hinweises auf die Patenterteilung: **10.12.2008**
(21) Anmeldenummer: 05021691.0
(22) Anmeldetag: 05.10.2005
(51) Int. Cl.: B62D 35/00, B60K 11/08

(54) **Bug für einen Personenkraftwagen**
Front portion of a motor car
Partie avant d'une voiture

(30) Priorität: 18.11.2004 DE 102004055682
(43) Veröffentlichungstag der Anmeldung: 24.05.2006
(73) Patentinhaber: Dr. Ing. h.c. F. Porsche Aktiengesellschaft, 70435 Stuttgart (DE)
(72) Erfinder: Singer, Norbert, 71665 Vaihingen (DE)

(56) Entgegenhaltungen:
- DE-C- 741 411
- FR-A- 1 150 725
- MAX NOTZLI ET AL: "NEUES MODELL MASERATI CORSE COMPETIZIONE" AUTOMOBIL-REVUE, HALLWAG, BERN, CH, Bd. 4, Nr. 4, 21. Januar 2004 (2004-01-21), Seite 5, XP008075034 ISSN: 0005-1314

## Beschreibung

Die Erfindung betrifft einen Bug für einen Personenkraftwagen nach dem Oberbegriff des Patentanspruchs 1.

Es ist ein Personenkraftwagen bekannt, CH Zeitschrift Automobil Revue Nr. 4, 21. Januar 2004, Seite 5, der einen solchen Bug mit einem Bugendteil und eine Windschutzscheibe umfasst. Zwischen der unteren Begrenzung der Windschutzscheibe und dem Bugendteil erstreckt sich eine Aufbauwand. In dem Bugendteil ist eine Lufteinlassöffnung vorgesehen, wobei das in die Lufteinlassöffnung eintretende Strömungsmedium über Luftauslassöffnungen in der Aufbauwand austritt. Die Lufteinlassöffnungen sind beiderseits einer Mittellängsebene des Personenkraftwagens angeordnet, und zwar in der Weise, dass das austretende Strömungsmedium auf die Windschutzscheibe trifft, was sich Luftwiderstand erhöhend auswirkt.

Die DE 43 19 281 A1 befasst sich mit einem plattenförmigen Verkleidungsteil für ein Kraftfahrzeug, welches Verkleidungsteil zur Verringerung aerodynamischer Verluste ausgebildet ist. In das Verkleidungsteil ist wenigstens ein Einlass eingearbeitet, der die Form einer so genannten NACA-Öffnung aufweist; die NACA-Öffnung wurde von der NASA für Raumfahrtanwendungen entwickelt.

Aus der DE 741 411 C ist ein Kraftfahrzeug mit einer im Bugendteil angeordneten Lufteinlassöffnung bekannt, die mit Luftauslassöffnungen verbunden ist. Die Luftauslassöffnungen sind beiderseits zu einer Mittellängsebene des Fahrzeugs angeordnet und verlaufen zu Längsseiten des Fahrzeugaufbaus.

Des Weiteren ist aus der FR 1 150 725 A ein Kraftfahrzeug mit einer Lufteinlassöffnung im Bugendteil bekannt, welche mit Luftauslassöffnungen verbunden ist, die sich im Haubenbereich des Fahrzeugs befinden und diese Luftauslassöffnungen sich ebenfalls zu den Längsseiten des Fahrzeugaufbaus erstrecken.

Es ist Aufgabe der Erfindung einen Bug für einen Personenkraftwagen mit wenigstens einer Lufteinlassöffnung und Luftauslassöffnungen in einer Aufbauwand zwischen Windschutzscheibe und Bugendteil zu schaffen, welche Luftauslassöffnungen zur Reduzierung des Luftwiderstandsbeiwerts beitragen.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass das über die in die Aufbauwand integrierte Luftauslasskanäle ins Freie geführte Strömungsmedium gezielt in Richtung Windschutzscheibensäulen bzw. Längsseiten des Aufbaus geleitet werden, wobei die Luftauslasskanäle durch ihre besondere Anordnung und Ausbildung zur Verringerung des Luftwiderstandsbeiwertes des Personenkraftwagens beitragen. Die Luftauslasskanäle verjüngen sich entgegen der Fahrtrichtung und weisen die Gestalt eines spitzwinkeligen Dreiecks auf, dessen Spitze zur Windschutzscheibensäule hin gerichtet ist und das mit einer vorderen Begrenzung quer zur Fahrzeuglängsrichtung verläuft. Schließlich lassen sich die Luftauslasskanäle, dadurch räumlich übersichtlich in der Aufbauwand anordnen, wenn letztere beiderseits einer Mittellängsebene mit einem erhabenen Wandbereich versehen ist, der benachbart des Bugendteils als spitz zulaufender Steg beginnt und sich dann entgegen der Fahrtrichtung und in Richtung zu den Windschutzscheibensäulen hin als Erweiterung fortsetzt.

In der Zeichnung wird eine Ausführungsbeispiel der Erfindung gezeigt, das nachstehend näher beschrieben wird.

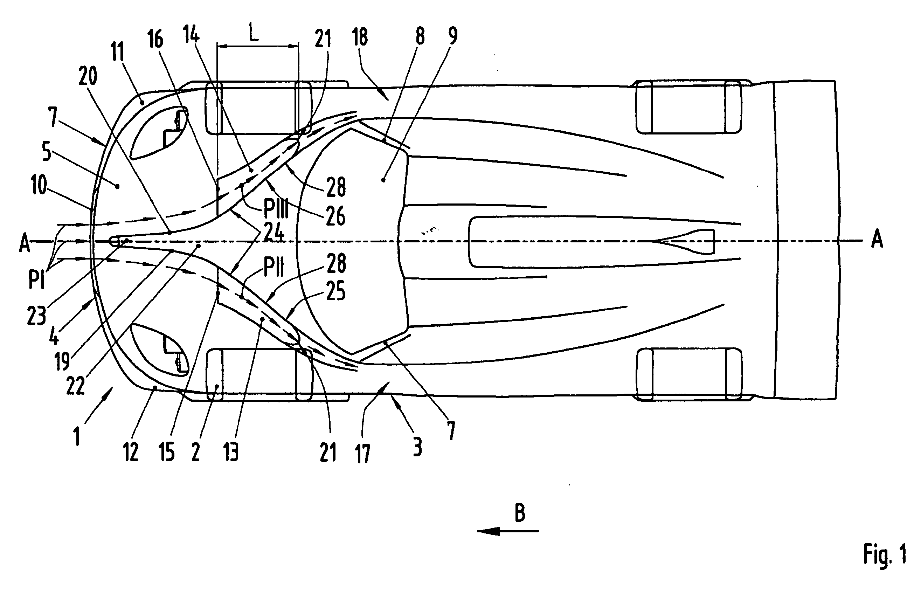

Es zeigen
- Fig. 1: eine Ansicht von oben auf einen Personenkraftwagen mit dem Bug nach der Erfindung,

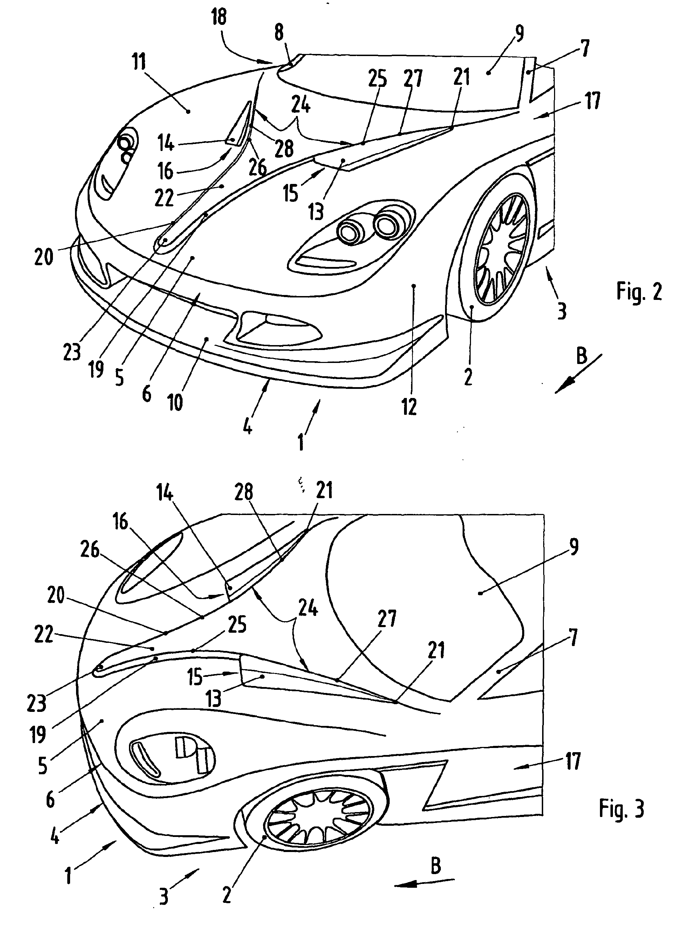

- Fig. 2: eine Schrägansicht von vorne links auf einen Bug eines Personenkraftwagens,
- Fig. 3: eine Schrägansicht von links oben auf den Bug des Personenkraftwagens nach Anspruch 1.

Ein Personenkraftwagen 1 umfasst einen von Rädern 2 getragenen Aufbau 3 mit einem Bug 4, der eine Aufbaustrukturen verkleidende Aufbauwand 5 aufweist, die sich zwischen einem Bugendteil 6 und einer von Windschutzscheibensäulen 7 und 8 begrenzten Windschutzscheibe 9 erstreckt. Das Bugendteil 6 des Aufbaus 3 ist mit wenigstens einer Lufteinlassöffnung 10 -Strömungspfeile Pl- und die an Seitenteile 11 und 12 anschließende Aufbauwand 5 ist zu beiden Seiten einer Mittellängsebene A-A des Personenkraftwagens 1 mit Luftauslasskanälen 13 und 14 versehen, die bspw. mit U-förmigem Querschnitt ausgeführt sind. Die Luftauslasskanäle 13 und 14 besitzen - in Fahrtrichtung B gesehen - vorne liegende Querbegrenzungen 15 und 16 die mit definiertem Abstand zum Bugendteil verlaufen, von wo aus besagte Luftauslasskanäle in Richtung -Strömungspfeile Pll und Plll zu den Windschutzscheibensäulen 7 und 8 Längsseiten 17 und 18 des Aufbaus 3 gerichtete Verläufe 19 und 20 aufweisen. Und die Luftauslasskanäle 13 und 14 verjüngen sich entgegen der Fahrtrichtung B, wobei jeder Luftauslasskanal bspw. 13 die Gestalt eines spitzwinkeligen Dreiecks oder einer NACA Öffnung - DE 43 19 281A1 - besitzt, dessen Spitze 21 zur Windschutzscheibensäule 7 bzw. Längsseite 17 hinweist. Die Länge L des Dreiecks von Querbegrenzung 15 zur Spitze 21 hin wie auch der U-förmige nach oben hin offene Querschnitt des Luftauslasskanals 13 oder 14 wird rechnerisch und/oder empirisch festgelegt.

Beiderseits der Mittellängsebene A-A ist die Aufbauwand 5 mit einem erhabenen Wandbereich 22 versehen, der benachbart des Bugendteils. 6 als schmaler Steg 23 beginnt und sich als Erweiterung 24 mit Kurvenlinien 25 und 26 in Richtung der Windschutzscheibensäulen 7 und 8 bzw. den Längsseiten 17 und 18 fortsetzt. Schließlich begrenzen die Kurvenlinien 25 und 26 mit Linienabschnitten 27 und 28 die Luftauslasskanäle 13 und 14.

## Patentansprüche

1. Bug für ein Personenkraftwagen mit einer sich zwischen einem Bugendteil (6) und einer von Windschutzscheibensäulen (7, 8) begrenzten Windschutzscheibe (9) erstreckenden Aufbauwand (5) eines Aufbaus (3) des Personenkraftwagens, wobei am Bugendteil (6) wenigstens eine Lufteinlassöffnung(10) und in der Aufbauwand (5) beiderseits einer Mittellängsebene (A-A) des Personenkraftwagens Luftauslasskanäle (13, 14) vorgesehen sind und die Luftauslasskanäle (13, 14) benachbart der Mittellängsachse (A-A) angeordnet sind und diese sich von einer vorderen Querbegrenzung (15, 16) entgegen der Fahrtrichtung (B) verjüngen und in Richtung von Längsseiten (17, 18) des Aufbaus (3) verlaufen, **dadurch gekennzeichnet, dass** die die Luftauslasskanäle (13, 14) umfassende Aufbauwand (5) beiderseits der Mittellängsebene (A-A) mit einem erhabenen Wandbereich (22) versehen ist, der benachbart des Bugendteils (6) als spitz zulaufender Steg (23) beginnt und sich dann entgegen der Fahrtrichtung (B) und zu den Windschutzscheibensäulen (7, 8) bzw. zu den Längsseiten (17, 18) des Aufbaus (3) hin als Erweiterung (24) fortsetzt.

2. Bug nach Anspruch 1, **dadurch gekennzeichnet, dass** jeder Luftauslasskanal (13, 14) als spitzwinkliges Dreieck ausgeführt ist, wobei eine Spitze (21) des Dreiecks zur Windschutzscheibensäule (7 und 8) bzw. zur Längsseite (17 und 18) hin gerichtet ist.

3. Bug nach den Ansprüchen 1 oder 2, **dadurch gekennzeichnet, dass** der erhabene Wandbereich (22) seitliche Kurvenlinien (25 und 26) aufweist, die abschnittsweise die Luftauslasskanäle (13, 14) mit Linienabschnitten (27, 28) begrenzen.

## Claims

1. Front portion of a motor car, with a body wall (5) of a body (3) of the motor car, which body wall extends between a front-portion end part (6) and a windscreen (9) which is delimited by windscreen pillars (7, 8), wherein at least one air inlet opening (10) is provided on the front-portion end part (6), and air outlet ducts (13, 14) are provided in the body wall (5) on both sides of a longitudinal centre plane (A-A) of the motor car, and the air outlet ducts (13, 14) are arranged adjacent to the longitudinal centre axis (A-A) and taper counter to the direction of travel (B) from a front transverse boundary (15, 16) and run in the direction of longitudinal sides (17, 18) of the body (3), **characterized in that** the body wall (5) which comprises the air outlet ducts (13, 14) is provided on both sides of the longitudinal centre plane (A-A) with a raised wall region (22) which begins in the form of a web (23) tapering to a point adjacent to the front-portion end part (6), and then continues in the form of an expansion (24) counter to the direction of travel (B) and toward the windscreen pillars (7, 8) and toward the longitudinal sides (17, 18) of the body (3).

2. Front portion according to Claim 1, **characterized in that** each air outlet duct (13, 14) is designed as an acute-angled triangle, with a vertex (21) of the triangle being directed toward the windscreen pillar (7 and 8) and toward the longitudinal side (17 and 18).

3. Front portion according to Claim 1 or 2, **characterized in that** the raised wall region (22) has lateral curve lines (25 and 26) which in sections delimit the air outlet ducts (13, 14) by means of line sections (27, 28).

## Revendications

1. Partie avant d'une voiture, comprenant une paroi de carrosserie (5) d'une carrosserie (3) de la voiture, s'étendant entre une partie d'extrémité (6) de la partie avant et un pare-brise (9) limité par des colonnes de pare-brise (7, 8), au moins une ouverture d'entrée d'air (10) étant prévue au niveau de la partie d'extrémité (6) de la partie avant et des canaux de sortie d'air (13, 14) étant prévus dans la paroi de carrosserie (5) de part et d'autre d'un plan médian longitudinal (A-A) de la voiture, et les canaux de sortie d'air (13, 14) étant disposés à proximité de l'axe médian longitudinal (A-A), se rétrécissant depuis une limitation transversale avant (15, 16) à l'encontre de la direction d'avance (B) et s'étendant dans la direction des côtés longitudinaux (17, 18) de la carrosserie (3), **caractérisée en ce que** la paroi de carrosserie (5) comprenant les canaux de sortie d'air (13, 14) est pourvue de part et d'autre du plan médian longitudinal (A-A) d'une région de paroi rehaussée (22), qui commence à proximité de la partie d'extrémité (6) de la partie avant sous forme de nervure (23) se terminant en pointe, et qui se poursuit ensuite à l'encontre de la direction d'avance (B) et vers les colonnes de pare-brise (7, 8) ou vers les côtés longitudinaux (17, 18) de la carrosserie (3) sous forme d'élargissement (24).

2. Partie avant selon la revendication 1, **caractérisée en ce que** chaque canal de sortie d'air (13, 14) est réalisé sous forme de triangle à angle aigu, une pointe (21) du triangle étant orientée vers la colonne de pare-brise (7 ou 8) ou vers le côté longitudinal (17 et 18).

3. Partie avant selon la revendication 1 ou 2, **caractérisée en ce que** la région de paroi rehaussée (22) présente des lignes latérales courbes (25 et 26) qui limitent en partie les canaux de sortie d'air (13, 14) avec des portions linéaires (27, 28).
